# EUROPEAN PATENT SPECIFICATION

(11) **EP 2 447 605 B1**
(45) Date of publication and mention of the grant of the patent: **05.12.2012**
(21) Application number: 10013996.3
(22) Date of filing: 27.10.2010
(51) Int. Cl.: F23D 14/06, C09D 179/08, F24C 3/08, B32B 27/08, F24C 15/10

(54) **Heating element and method of manufacturing a base body of a heating element**
Heizelement und Verfahren zur Herstellung eines Grundkörpers eines Heizelements
Élément de chauffage et procédé de fabrication d'un corps de base d'élément de chauffage

(43) Date of publication of application: 02.05.2012
(73) Proprietor: Electrolux Home Products Corporation N.V., 1130 Brussel (BE)
(72) Inventor: Sanità, Massimo, 33170 Pordenone (IT); Tomaselli, Carlo, 31010 Farra di Soligo (IT); Badali, Marco, 33084 Cordenons (IT); Trivillin, Fiorella, 33170 Pordenone (IT)
(74) Representative: Baumgartl, Gerhard Willi

(56) References cited:
- EP-A2- 1 952 736
- WO-A1-00/69945
- DE-C1- 19 746 845
- DE-U1- 20 101 865
- GB-A- 2 334 328
- GB-A- 2 407 747
- JP-A- 2000 150 122
- US-A- 3 971 361

## Description

The present application is directed to a heating element for a gas burner cooking hob and a method of manufacturing a functional unit of a heating element.

Heating elements of cooking hobs, in particular gas cooking hobs, in general comprise functional units which have base bodies that are in the long range exposed to comparatively high temperatures, up to 200 °C and 250 °C for example. For this reason, respective base bodies are often manufactured from metals, such as aluminium and the like. For example DE 197 46 845 C1 proposes the use of thermo-resistant materials for electric heating elements. Albeit aluminium is comparatively cheap, respective metal base bodies involve comparatively high casting and machining manufacturing costs.

For this reason it has been thought of alternative, in particular cheaper, materials for respective base bodies. As one alternative, heat-resistant plastic materials have been proposed in EP 0 615 096 A1.

JP 2000 150 122 A proposes a heating element using electrical energy with a protective layer of a temperature resistant imide plastic material. GB 2 234 328 A discloses a gas burner with a base unit with a hollow plastic shell reinforced by a thermoset plastic resin, US 3 971 361 a low thermal mass cooking utensil with a high temperature resistant plastic shield made of a polyimide material. EP 1 952 736 A2 proposes to apply a coating of a polyamid-imide to a food support for holding food items during cooking in an oven.

Heat resistant plastic materials such as thermosetting plastics like unsaturated polyester resin (UP), phenolic formaldehyde resin (PF), epoxy (EP), melamine phenolic resin (MP), melamine formaldehyde resin (MF) may be used in this context. These materials are comparatively cheap, but do not withstand long-term high temperatures up to 300 °C in oxidative environments. Such conditions, i. e. temperatures up to 300 °C and more in oxidative environments may readily occur with common gas burners, or other heating elements of household appliances, for example. Thermosetting plastics are therefore of limited use.

Plastic materials with long-term high temperature resistance even in oxidative environments, such for example silicon or fluorine resins, are still too expensive. The same applies to materials comprising technical plastic polymers and ceramic fillers or fibre fillers, as for example known from DE 603 12 832 T2, and to technical plastics such as condensation polyimides available under the trade name Vespel®SP or Vespel®ST and proposed in DE 201 01 865 U1, DE 200 10 694 U1 and DE 100 29 632 A1, WO 00/69945 A1.

Starting from this, it is an object of the invention to provide alternative cooking hob heating elements that exhibit comparatively high temperature resistance and can be manufactured at comparatively low costs, at least with respect to functional units thereof. Further, a method of manufacturing a functional unit of a heating element of a cooking hob, the use of a certain plastic material in connection with base bodies of functional units of a heating element of a cooking hob and a household appliance comprising the proposed heating element shall be provided.

This object is achieved by independent claims 1, 6 and by claims 13 and 17. Embodiments of the invention result from dependent claims.

According to claim 1, a heating element for a gas burner cooking hob is provided.

The heating element comprises a functional unit having a base body made from a thermosetting plastic, also known as thermosets. A functional unit may be a subunit of the heating element which subunit implements a mechanical and/or technical function. For example, a burner cup of a gas burner represents such a functional unit.

At least one protective layer of a temperature resistant imide plastic material is applied to the base body at least in a section impinged with heat during normal operation of the heating element. A layer may be, but is not restricted to surface coatings applied to the base body after its manufacture. It is also possible that a layer is produced in the course of manufacture of the base body, for example in the course of casting the base body.

According to the invention, the protective layer is applied to the inner walls of the base body and also to the flange portions abutting the burner head and cooking hob plate.

The layer of temperature resistant imide plastic material shields the base body, at least the respective section, from high temperatures, such as up to 300°C and more, and environments in which comparatively oxidative conditions prevail. In this way, the base body - or in more detail the base body material - can be kept from temperature induced oxidative degradation. Long-term stability and reliability of the heating element can be greatly improved. Increased long-term stability is inter alia due to the fact, that oxygen flow action induced ablation of the base body at high temperatures is at least greatly prevented by the protective layer. Note that the layer thickness may be selected according to respective needs, in particular such that temperature induced oxidative degradation of the thermoset can be greatly avoided.

A further advantage is that standard, comparatively cheap thermosets such as epoxy (EP), phenolic formaldehyde resin (PF), melamine phenolic resin (MP), melamine formaldehyde resin (MF) and in particular unsaturated polyester resin (UP) can be used. Although the protective layer induces additional costs, a cost advantage vis-à-vis metal materials, ceramic materials and fully resistant plastic materials still remains.

As can be seen, a heating element with satisfactory resistance even in highly oxidative environments can be achieved at acceptable costs.

In an embodiment, the imide plastic material comprises at least one of a polyimide, polyamid-imide and polyester-imide plastic material. These materials are particularly efficient, in particular in combination with the thermosets mentioned beforehand, in particular UP, to shield the base body from high temperature oxidative environments. This in particular applies to imide plastic materials like polyimide resins, aromatic polyimide resins, in particular aromatic polyimide film shaped resins, polyamide-imide resins, polyester-imides. Such imide plastic materials are available under tradenames Avimid®R, Avimid®N, Kapton®, Vesper®, Torlon®, Voltatex®, for example. It shall be mentioned, that for example Avimid®R and Avimid®N are polyimide resins type (PI), Kapton® are aromatic polyimide resins film shaped, Vespel® are polyimide resin types (PI), Torlon® are polyamide-imide resin types (PAI) and Voltatex® are polyester-imide resin types (PEI). It may be that the imide plastic materials, in particular the plastic materials available under the aforementioned tradenames, require slightly different manufacturing processes, which is addressed below. However, the different manufacturing processes are thought to be equally efficient, in particular with respect to overall manufacturing costs, quality and protection efficiency of the protective layer.

The plastic materials mentioned above as well as those mentioned further below may be in accordance with at least one of the following formulae: 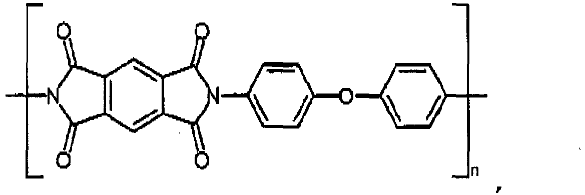 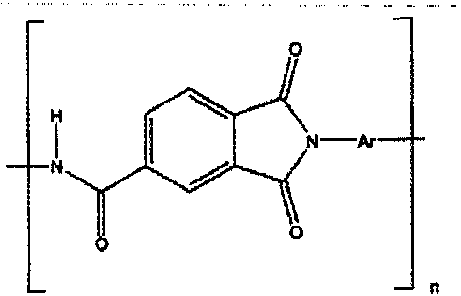 and 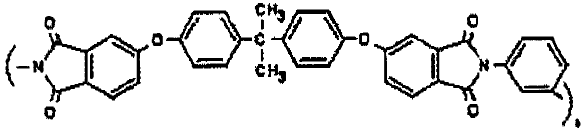 wherein the first formula describes a polyimide structure (PI), the second formula describes a polyamide-imide (PAI) and the third formula describes a polyester-imide (PEI) structure.

The protective layer is successfully applicable with gas based heating elements. Therefore, in an embodiment the functional unit of the heating element is a gas burner, the base body is a gas burner cup and the at least one protective layer is applied to at least a section of the inner walls and/or outer walls of the gas burner cup. Preferably, the protective layer is applied to all inner walls or sides of the cup. Here, the manufacturing costs of the cup can be kept at a comparatively low level while providing excellent protection of the thermoset against temperature induced oxidative degradation. Further, advantageous product life times can be obtained.

According to claim 5, a method of manufacturing a functional unit of a heating element of a gas burner cooking hob is provided.

According to the proposed method, a base body of the functional unit is manufactured from a thermosetting plastic material. The thermosetting plastic material can be any of the above identified thermosets, without being restricted thereto.

Further, at least one layer of temperature resistant imide plastic material is applied to the base body at least in a section impinged with heat during normal operation of the heating element, the protective layer is applied to the inner walls of the base body and also to the flange portions abutting the burner head and cooking hob plate.

The proposed method is comparatively simple and cost effective which translates into comparatively low manufacturing costs of the functional unit and therefore the heating element.

The base body can be manufactured by plastic casting which is simpler compared to aluminium casting in particular with respect to the casting process, casting moulds and machining operations such as finishing. As a consequence, the functional unit manufacturing costs can be kept at a low level.

The at least one protective layer may be applied to the base body in different fashions, depending inter alia on the type of imide plastic material used. In particular, at least one layer may be sprayed onto the base body or co-moulded to the base body during moulding the base body. Co-moulding shall mean that the imide plastic material, either as a coating or film or as a pre-shape, is arranged or applied to a respective mould tool cavity prior to the moulding process.

As to further advantages and advantageous effects, reference is made to the discussion above.

In general, any imide plastic material can be used. However, it is preferred that the imide plastic material is selected from the group of polyimide, polyamid-imide and polyester-imide. Such materials or mixtures thereof can be coated onto the base body and/or applied to a moulding tool to prior to moulding, as already described above.

The imide plastic material can in particular be selected from the group of plastic materials comprising polyimide resins, aromatic polyimide resins, in particular aromatic polyimide film shaped resins, polyamide-imide resins, polyester-imides. Such imide plastic materials are available under the tradenames Avimid®R, Avimid®N, Kapton®, Vespel®, Torlon®, Voltatex®, for example.

Avimid® and Voltatex® as well as similar plastic materials can for example be applied to the base body by spraying or coating followed by curing. Kapton®, Vespel® and Torlon® as well as similar plastic materials can be applied by co-moulding, wherein Kapton ® and similar plastics can be applied as a film to the moulding tool cavity, and Vespel® and similar plastics can be applied as a pre-shape. Voltatetex® and similar plastic materi-als can be coated onto the base body. Note that Avimid®, Kapton® and Vespel® are polyimides, Torlon® is a polyamide-imide and Voltatex® is a polyester-imide.

It has already be mentioned, that at least one of the at least one protective layer can be applied by spraying or coating onto the base body. It is also conceivable that the respective imide plastic material is sprayed or coated onto inner walls of a tool used for moulding the base body. Further, if the base body is manufactured by moulding, the protective layer material finally forming at least one of the at least one protective layer is applied to a moulding tool used for moulding the base body. The protective layer material can be applied to inner walls of the moulding tool as a coating or film, in particular by spray techniques. It is also possible that the protective layer material is applied to the cavity of the moulding tool as a pre-shaped insert onto which the base body material is overmoulded. If several protective layers shall be provided, as for example for establishing a protective multilayer, respective protective layer materials can be applied by any of the aforementioned possibilities, i. e. a first protective layer material may be applied to the moulding tool as a pre-shape, whereas a second protective layer material may be sprayed onto the base body after moulding.

The above discussed possibilities of applying at least one of the at least one protective layer are effective and can be conducted in a cost efficient manner, translating into low manufacturing costs of the base body.

According to claim 13, the use of a temperature resistant imide plastic material as a protective layer for thermosetting plastic base body of a functional unit of a heating element of a cooking hob is proposed, whereby the protective layer is applied to the inner walls of the base body and also to the flange portions abutting the burner head and cooking hob plate. As to advantages and advantageous effects and further embodiments according to dependent claims 14 to 16, reference is made to the discussion above, which applies mutatis mutandis.

According to claim 17, an appliance of household or industrial type is proposed, which appliance comprises a heating element as proposed further above and probably described below, including any embodiments thereof. As to advantages and advantageous effects reference is made to the discussion above.

An exemplary embodiment and application of the invention will now be described in connection with the annexed figure which shows a cross sectional view of a gas burner 1 of a gas cooking hob. The gas cooking hob may comprise one or several gas burners 1. Note that the gas burner 1 is described only in so far as needed for understanding the invention. Note that the gas burner 1 is not restricted to gas cooking hobs.

The gas burner 1 comprises a gas supply 2 leading to a gas nozzle 3 penetrating a bottom opening of a burner cup 4 of the gas burner 1. A burner head 5 is put on the top opening of the burner cup 4 such that the inner volume of the burner cup 4 makes up a first annular chamber 5.

The burner head 6 comprises a cup-shaped bottom part 7 made from aluminium, which is covered by a top cover 8 made from cast iron. The inner volume of the bottom part 7 makes up a second annular chamber 9. The bottom part 7 comprises a central opening 10 with flanges 11 protruding into the first annular chamber 5.

Exhaust openings 12 are provided between the bottom part 7 and the top cover 8. Air inlet openings 13 are arranged between the burner cup 4 and the burner head 6.

The gas burner 1 is attached to a cooking hob plate 14 with a flange of the burner cup 4 abutting against the lower side of the cooking hob cover plate. The cooking hob cover plate 14 may be made from steel, for example.

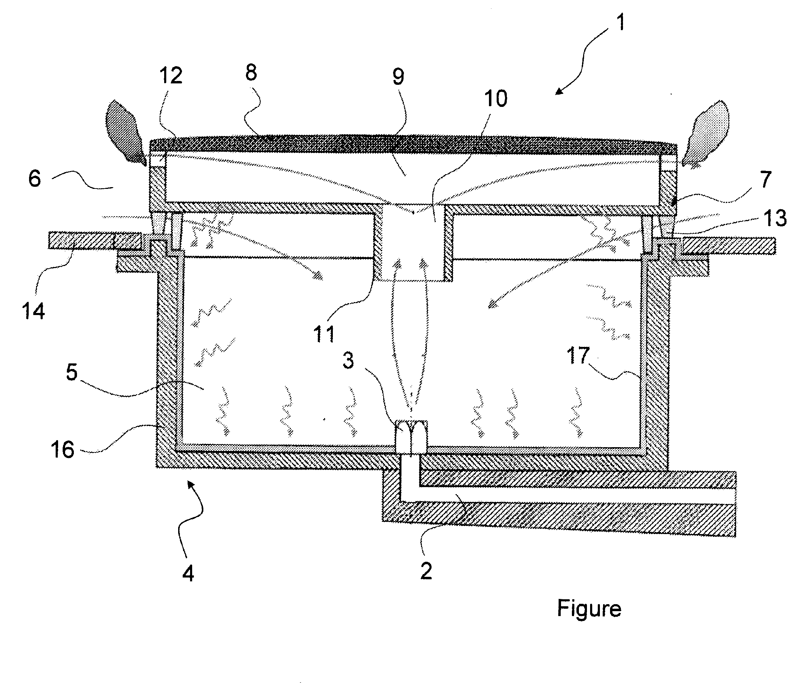

During operation of the gas burner 1, gas exiting the gas nozzle 3 enters the first annular chamber 5 towards the central opening 10. In the first annular chamber 5 gas is mixed with air flowing into the first annular chamber 5 via the air inlet openings 13. Gas-air mixture enters the second annular chamber 9 through the central opening 10 and exits the second annular chamber 9 via the exhaust openings 12. Combustible gas-air mixture exiting the exhaust openings can be ignited resulting in a gas flame 15 for heating items, such as cooking pots, placed above the gas burner 1. In the figure, the flow of gas, gas-air mixture and inlet air is indicated by arrows.

During operation of the gas burner 1 the top cover 8 and the bottom part 7 may be heated to temperatures up to 300°C and even more. Heat generated by the combustion of the air-gas mixture impinges the burner cup 4 via heat conduction from the burner head 6, and heat convection and radiation mainly via the hot bottom part 7. Heat transferred to the burner cup 4 is schematically visualized by corrugated arrows.

Due to high temperatures which may rise up to 300 °C and even more during operation, heat resistant materials withstanding such temperatures are required also for the burner cup 4. For this reason, conventional burner cups are manufactured from aluminium or ceramics. Albeit these materials are well suitable for mass production, they require comparatively elaborate manufacturing processes, in particular with respect to casting and finishing. It is also conceivable that temperature resistant plastic materials, such as silicon and fluorine resins, are used for manufacturing the burner cup 4 as such. However such materials are comparatively expensive. Conventional thermosetting plastic materials undergo temperature induced oxidative degradation under conditions prevailing with gas burners 1.

The invention proposes a possibility to manufacture the burner cup 4 with comparatively low material and manufacturing costs in that a base body of the burner cup 4 is manufactured from a thermosetting plastic material and a protective layer 17 of a temperature resistant imide plastic material is applied to the base body 16. In more detail, the protective layer 17 is applied to the inner walls of the base body 16 and also to the flange portions abutting the burner head 6 and cooking hob plate 14. Note that the thickness of the protective layer 17 compared to the wall thickness of the burner cup 4 may not be true to scale.

The base body 16 thus can be manufactured at comparatively low cost, which is in particular due to low material, manufacturing and machining costs. The required resistance of the burner cup 4 is achieved by the protective layer 17 which prevents temperature induced oxidative degradation of the thermosetting plastic material. Albeit that the protective layer 17 has to be applied to the base body 16 and the material of the protective layer 17 causes additional costs, the cost advantages are still remarkable compared to materials mentioned above.

It has been found in functional tests that heat induced oxidative degradation of thermosetting plastic materials occurs at comparatively high temperatures, such as 300 °C and more, in highly oxidative environments. Such conditions prevail within the second annular chamber 9 of the gas burner 1 during its operation. In particular, an oxygen flow action occurring within the second annular chamber 9 would ablate the surface of thermosetting plastic materials impinged with heat. The protective layer 17 in particular prevents such ablation and also shields the base body 16 from heat. The thickness of the protective layer 17 may be selected such that optimal protection is achieved, in particular with respect to temperature induced oxidative degradation. The respective optimal thickness of the protective layer may depend inter alia on the maximal temperatures occurring during operation of the gas burner 1 and other factors.

The imide plastic material may be a polyimide, polyamid-imide and polyester-imide plastic material or a mixture of such materials. In particular imide plastic materials available under the tradenames Avimid®R, Avimid®N, Kapton®, Vespel®, Torlon®, Voltatex® are well suitable.

The protective layer 17 may be applied to the base body 16 after its manufacture, in particular by spraying, followed by curing the sprayed imide plastic material at high temperature. Another option is to apply the imide plastic material to a moulding tool, in form of a film or a pre-shaped insert, which moulding tool is used for moulding the base body 16. In this way, the protective layer 17 is applied to the base body 16 in the course of moulding the base body 16. Note that more than one protective layer 17 may be applied to the base body 16 by using any one of the aforementioned possibilities.

The base body 16 can be manufactured from any suitable thermosetting material, in particular from unsaturated polyester resin, epoxy, phenolic formaldehyde resin, melamine phenolic resin and melamine formaldehyde resin.

It shall be mentioned that a thermosetting plastic material in combination with a protective layer as described beforehand can be used for any other functional unit of a heating element. Therefore, the scope of invention shall not be restricted to the embodiment described in connection with the annexed figure.

In all it becomes clear that the proposed gas burner 1, in particular the burner cup 4 is sufficiently resistant against temperature induced oxidative degradation and can be manufactured at comparatively low cost.

### Reference Signs

- 1: gas burner
- 2: gas supply
- 3: gas nozzle
- 4: burner cup
- 5: first annular chamber
- 6: burner head
- 7: bottom part
- 8: top cover
- 9: second annular chamber
- 10: central opening
- 11: flange
- 12: exhaust opening
- 13: air inlet opening
- 14: cooking hob plate
- 15: gas flame
- 16: base body
- 17: protective layer

## Claims

1. Heating element (1) for a gas burner cooking hob, the heating element (1) comprising
- a functional unit (4) with a base body (16) made from a thermosetting plastic, and
- a burner head (6),
at least one protective layer (17) of a temperature resistant imide plastic material being applied to the base body (16) at least in a section impinged with heat during normal operation of the heating element (1), wherein the protective layer (17) is applied to the inner walls of the base body (16) and also to the flange portions abutting the burner head (6) and cooking hob plate (14).

2. Heating element (1) according to claim 1, wherein the imide plastic material comprises at least one of a polyimide, polyamid-imide and polyester-imide plastic material.

3. Heating element (1) according to claim 1 or 2, wherein the imide plastic material is selected from the group comprising polyimides, aromatic polyimides, in particular film shaped aromatic polyimides, polyamide-imides and polyester-imides, in particular according to at least one of the following formulae: 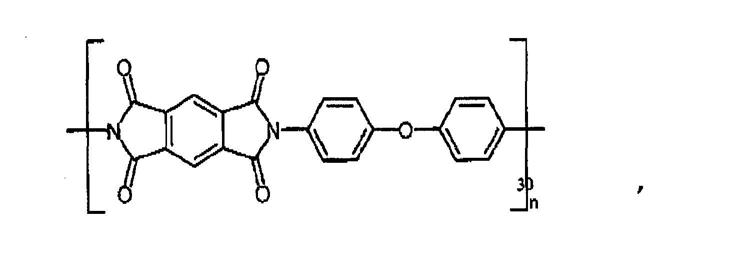 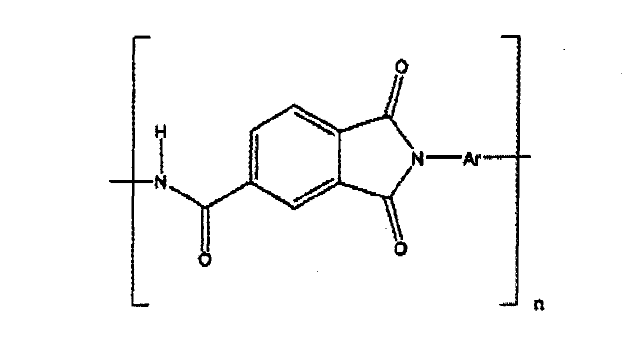 and

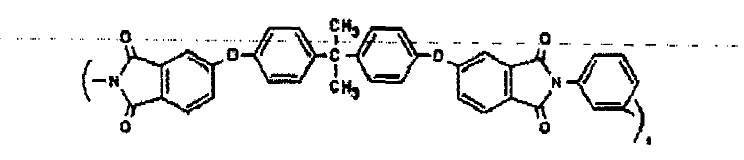

4. Heating element (1) according to at least one of claims 1 to 3, wherein the thermosetting plastic is selected from the group of unsaturated polyester resin, epoxy, phenolic formaldehyde resin, melamine phenolic resin and melamine formaldehyde resin.

5. Heating element (1) according to at least one of claims 1 to 4, the functional unit being a gas burner (1), the base body being a gas burner cup (4) and the at least one protective layer (17) being applied to at least a section of the inner and/or outer walls of the gas burner cup (4).

6. Method of manufacturing a functional unit (4) of a heating element (1) of a gas burner cooking hob, the heating element comprising a burner head (6), wherein a base body (16) of the functional unit (4) is manufactured from a thermosetting plastic material, and at least one protective layer (17) of temperature resistant imide plastic material is applied to the base body (16) at least in a section impinged with heat during normal operation of the heating element, wherein the protective layer (17) is applied to the inner walls of the base body (16) and also to the flange portions abutting the burner head (6) and cooking hob plate (14).

7. Method according to claim 6, wherein the imide plastic material is selected from the group of polyimide, polyamid-imide and polyester-imide.

8. Method according to claims 6 or 7, wherein the imide plastic material is selected from the group comprising polyimides, aromatic polyimides, in particular film shaped aromatic polyimides, polyamide-imides and polyester-imides, in particular according to at least one of the following formulae: 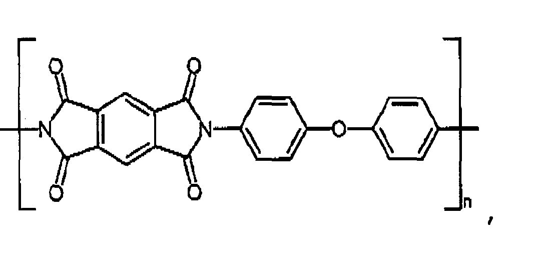 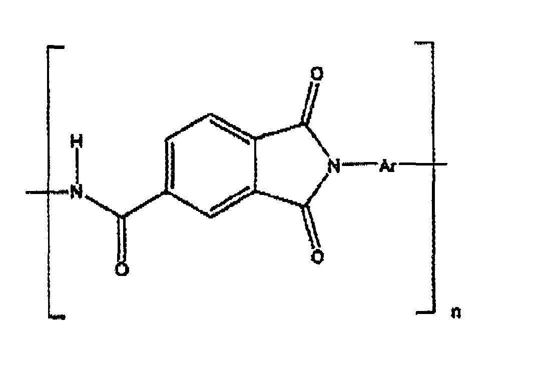 and

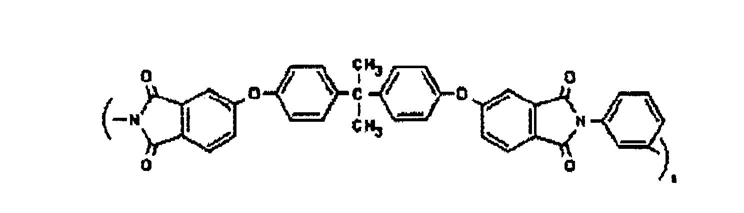

9. Method according to at least one of claims 6 to 8, wherein at least one of the at least one protective layer (17) is sprayed onto to the base body (4).

10. Method according to at least one of claims 6 to 9, wherein the thermosetting plastic is selected from the group of unsaturated polyester resin, epoxy, phenolic formaldehyde resin, melamine phenolic resin and melamine formaldehyde resin

11. Method according to at least one of claims 6 to 10, wherein the base body (4) is manufactured by moulding and the material of at least one of the at least one protective layer (17) is applied to a moulding tool used for moulding the base body, preferably in form of a film.

12. Method according to at least one of claims 6 to 11, wherein the base body (4) is manufactured by moulding and the material of at least one of the at least one protective layer (17) is applied as a pre-shaped insert to a moulding tool used for moulding the base body.

13. Use of a temperature resistant imide plastic material as a protective layer (17) for a thermosetting plastic base body (16) of a functional unit (4) of a heating element (1) of a gas burner cooking hob, the heating element comprising a burner head (6), wherein the protective layer (17) is applied to the inner walls of the base body (16) and also to the flange portions abutting the burner head (6) and cooking hob plate (14).

14. Use according to claim 13, wherein the imide plastic material is selected from the group of polyimide, polyamid-imide and polyester-imide.

15. Use according to claim 13 or 14, wherein the imide plastic material is selected from the group of plastic materials comprising polyimide resins, aromatic polyimide resins, in particular aromatic polyimide film shaped resins, polyamide-imide resins, polyester-imides, in particular according to at least one of the following formulae: 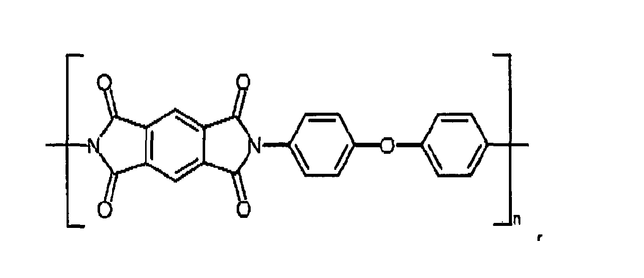 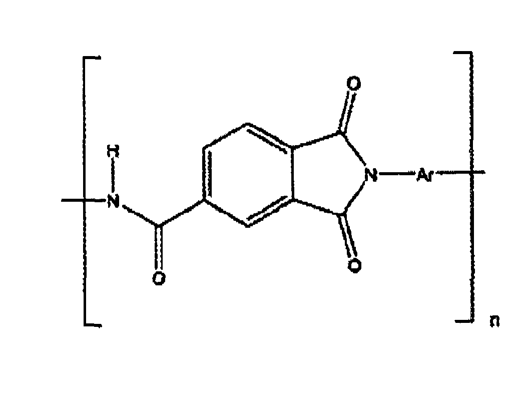 and

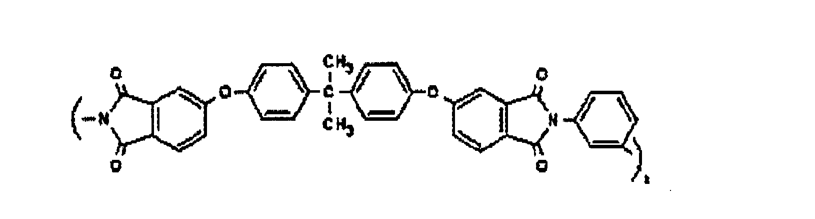

16. Use according to at least one of claim 13 to 15, wherein the functional unit is a gas burner (1), the base body is a gas burner cup (4) and the at least one protective layer (17) is applied at least to a section of the inner walls of the gas burner cup (4).

17. Appliance of household or industrial type, comprising a heating element (1) according to at least one of claims 1 to 5.

## Patentansprüche

1. Heizelement (1) für ein Gasbrenner-Kochfeld, wobei das Heizelement (1)
- eine Funktionseinheit (4) mit einem Basiskörper (16) aus einem Duroplast und
- einen Brenner Kopf (6) umfasst,
wobei auf dem Basiskörper (16) wenigstens eine Schutzschicht (17) eines temperaturbeständigen Imid-Kunststoffmaterials wenigstens in einem Abschnitt aufgebracht ist, auf den im Normalbetrieb des Heizelements (1) Hitze auftrifft, wobei die Schutzschicht (17) auf den Innenwänden des Basiskörpers (16) ebenso wie auf dem Flanschabschnitten aufgebracht ist, welche an den Brennerkopf (6) und die Kochfeldplatte (14) anschließen.

2. Heizelement (1) gemäß Anspruch 1, wobei das Imid-Kunststoffmaterial wenigstens eines aus Polyimid, Polyamidimid und Polyesterimid-Kunststoffmaterial umfasst.

3. Heizelement (1) gemäß Anspruch 1 oder 2, wobei das Imid-Kunststoffmaterial ausgewählt ist aus der Gruppe bestehend aus Polyimiden, aromatischen Polyimiden, insbesondere filmartigen aromatischen Polyimiden, Polyamidimiden und Polyesterimiden, insbesondere gemäß wenigstens einer der folgenden Formeln: 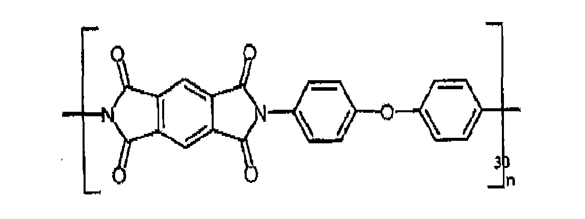 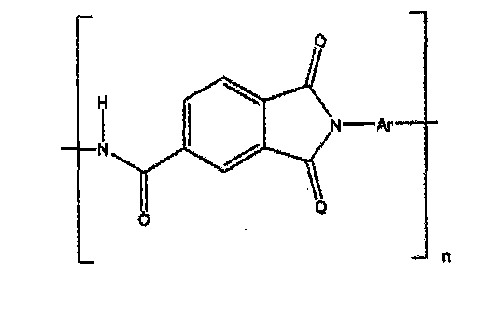 und

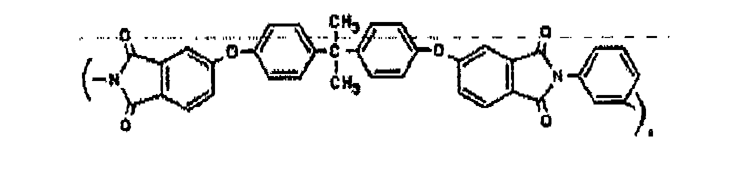

4. Heizelement (1) gemäß wenigstens einem der Ansprüche 1 bis 3, wobei der Duroplast aus der Gruppe bestehend aus ungesättigtem Polyesterharz, Epoxid, Phenolformaldehydharz, Melaminphenolharz und Melaminformaldehydharz ausgewählt ist.

5. Heizelement (1) gemäß wenigstens einem der Ansprüche 1 bis 4, wobei die Funktionseinheit ein Gasbrenner (1) ist, der Basiskörper eine Gas Brennerschale (4) ist und die wenigstens eine Schutzschicht (17) auf wenigstens einem Abschnitt der Innen- und/oder Außenwand der Gasbrennerschale (4) aufgebracht ist.

6. Verfahren zur Herstellung einer Funktionseinheit (4) eines Heizelements (1) eines Gasbrenner-Kochfeldes, wobei das Heizelement einen Brennerkopf (6) umfasst, wobei ein Basiskörper (16) der Funktionseinheit (4) aus einem Duroplast-Material hergestellt ist und wenigstens eine Schutzschicht (17) aus temperaturbeständigem Imid-Kunststoffmaterial auf dem Basiskörper (16) wenigstens in einem Abschnitt aufgebracht ist, auf den im Normalbetrieb des Heizelements die Hitze auftrifft, wobei die Schutzschicht (17) auf den Innenwänden des Basiskörpers (16) und auch auf den Flanschabschnitten aufgebracht ist, die an den Brennerkopf (6) und die Kochfeldplatte (14) anschließen.

7. Verfahren gemäß Anspruch 6, wobei das Imid-Kunststoffmaterial aus der Gruppe bestehend aus Polyimid, Polyamidimid und Polyesterimid ausgewählt ist.

8. Verfahren Gemäß Anspruch 6 oder 7, wobei das Imid-Kunststoffmaterial aus der Gruppe bestehend aus Polyimiden, aromatischen Polyimiden, insbesondere filmartigen aromatischen Polyimiden, Polyamidimiden und Polyesterimiden ausgewählt ist, insbesondere gemäß wenigstens einer der folgenden Formeln: 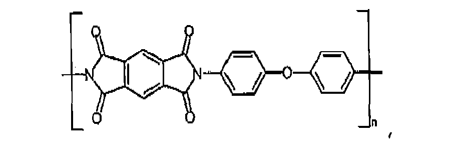 und

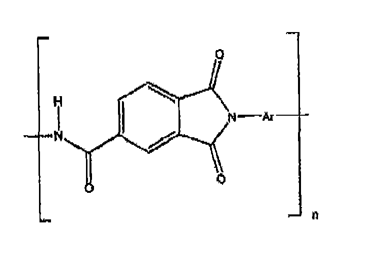

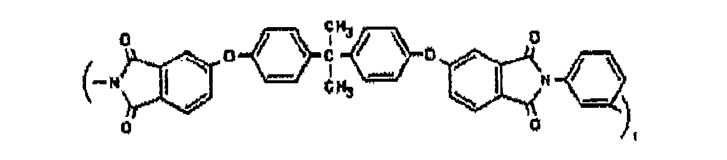

9. Verfahren gemäß wenigstens einem der Ansprüche 6 bis 8, wobei wenigstens eine der wenigstens einen Schutzschicht (17) auf den Basiskörper (4) auf gesprüht ist.

10. Verfahren gemäß wenigstens einem der Ansprüche 6 bis 9, wobei der Duroplast aus der Gruppe bestehend aus ungesättigtem Polyesterharz, Epoxid, Phenolformaldehydharz, Melaminphenolharz und Melaminformaldehydharz ausgewählt ist.

11. Verfahren gemäß wenigstens einem der Ansprüche 6 bis 10, wobei der Basiskörper (4) in einem Formungsverfahren hergestellt ist und das Material wenigstens einer der wenigstens einen Schutzschicht (17) - vorzugsweise in Form eines Films - auf ein Formwerkzeug aufgebracht ist, das zum Formen des Basiskörpers verwendet wird.

12. Verfahren gemäß wenigstens einem der Ansprüche 6 bis 11, wobei der Basiskörper (4) in einem Formungsverfahren hergestellt ist und das Material wenigstens einer der wenigstens einen Schutzschicht (17) als vorgeformte Einlage in ein zum Formen des Basiskörpers verwendetes Formwerkzeug aufgebracht ist.

13. Verwendung eines temperaturbeständigen Imid-Kunststoffmaterials als Schutzschicht (17) für einen Duroplast-Basiskörper (16) einer Funktionseinheit (4) eines Heizelements (1) eines Gasbrenner-Kochfelds, wobei das Heizelement einen Brennerkopf (6) umfasst, wobei die Schutzschicht (17) auf die Innenwände des Basiskörpers (16) und auch auf die Flanschabschnitte aufgebracht ist, die an den Brennerkopf (6) und die Kochfeldplatte (14) anschließen.

14. Verwendung gemäß Anspruch 13, wobei das Imid-Kunststoffmaterial aus der Gruppe bestehend aus Polyimid, Polyamidimid und Polyesterimid ausgewählt ist.

15. Verwendung gemäß Anspruch 13 oder 14, wobei das Imid-Kunststoffmaterial aus der Gruppe von Kunststoffmaterialien bestehend aus Polyimidharzen, aromatischen Polyimidharzen, insbesondere filmartigen aromatischen Polyimidharzen, Polyamidimidharzen, Polyesteramiden ausgewählt ist, insbesondere gemäß wenigstens einer der folgenden Formeln:

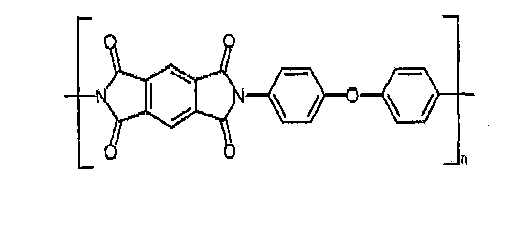

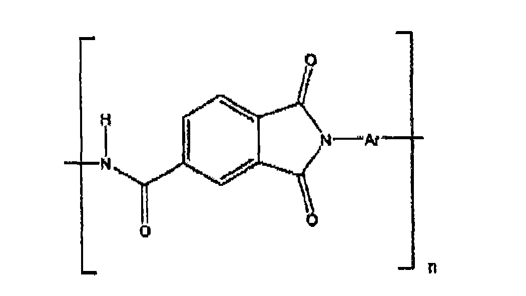

16. Verwendung gemäß wenigstens einem der Ansprüche 13 bis 15, wobei die Funktionseinheit ein Gasbrenner (1) ist, der Basiskörper eine Gasbrennerschale (4) ist und die wenigstens eine Schutzschicht (17) wenigstens auf einem Abschnitt der Innenwände der Gasbrennerschale (4) aufgebracht ist.

17. Haushalts- oder Industriegerät, das ein Heizelement (1) gemäß wenigstens einem der Ansprüche 1 bis 5 umfasst.

## Revendications

1. Elément chauffant (1) pour une table de cuisson à brûleur à gaz, lequel élément chauffant (1) comprend :
- une unité fonctionnelle (4) avec un corps de base (16) fait en une matière plastique thermodurcissable, et
- une tête de brûleur (6),
au moins une couche protectrice (17) en une matière plastique de type imide thermorésistante étant appliquée au corps de base (16) au moins dans une section affectée par de la chaleur durant un fonctionnement normal de l'élément chauffant (1),
dans lequel la couche protectrice (17) est appliquée aux parois intérieures du corps de base (16) et aussi aux parties de rebord contiguës à la tête de brûleur (6) et à la plaque de la table de cuisson (14).

2. Elément chauffant (1) selon la revendication 1, dans lequel la matière plastique de type imide comprend au moins une matière plastique parmi un polyimide, un polyamide-imide et un polyester-imide.

3. Elément chauffant (1) selon la revendication 1 ou 2, dans lequel la matière plastique de type imide est choisie dans le groupe comprenant les polyimides, les polyimides aromatiques, en particulier les polyimides aromatiques en forme de film, les polyamide-imides et les polyester-imides, en particulier conformes à au moins l'une des formules suivantes : 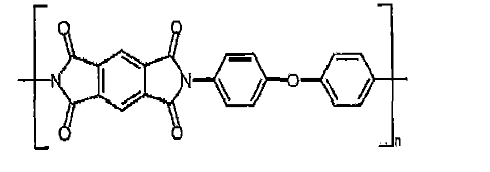 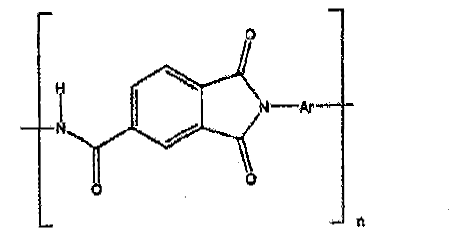 et

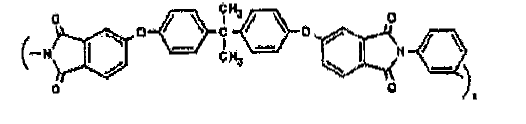

4. Elément chauffant (1) selon au moins l'une des revendications 1 à 3, dans lequel la matière plastique thermodurcissable est choisie dans le groupe constitué par une résine de polyester insaturé, une résine époxy, une résine de formaldéhyde phénolique, une résine phénolique de mélamine et une résine de mélamine-formaldéhyde.

5. Elément chauffant (1) selon au moins l'une des revendications 1 à 4, dans lequel l'unité fonctionnelle est un brûleur à gaz (1), le corps de base est une coupelle de brûleur à gaz (4) et l'au moins une couche protectrice (17) est appliquée à au moins une section des parois intérieures et/ou extérieures de la coupelle de brûleur à gaz (4).

6. Procédé pour fabriquer une unité fonctionnelle (4) d'un élément chauffant (1) d'une table de cuisson à brûleur à gaz, l'élément chauffant comprenant une tête de brûleur (6), dans lequel un corps de base (16) de l'unité fonctionnelle (4) est fabriqué en une matière plastique thermodurcissable, et au moins une couche protectrice (17) en matière plastique de type imide thermorésistante est appliquée au corps de base (16) au moins dans une section affectée par de la chaleur durant un fonctionnement normal de l'élément chauffant, dans lequel la couche protectrice (17) est appliquée aux parois intérieures du corps de base (16) et aussi aux parties de rebord contiguës à la tête de brûleur (6) et à la plaque de la table de cuisson (14).

7. Procédé selon la revendication 6, dans lequel la matière plastique de type imide est choisie dans le groupe comprenant un polyimide, un polyamide-imide et un polyester-imide.

8. Procédé selon la revendication 6 ou 7, dans lequel la matière plastique de type imide est choisie dans le groupe comprenant les polyimides, les polyimides aromatiques, en particulier les polyimides aromatiques en forme de film, les polyamide-imides et les polyester-imides, en particulier conformes à au moins l'une des formules suivantes : 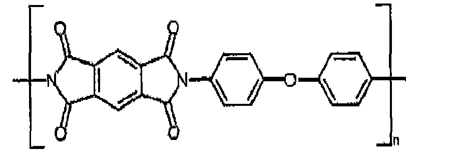 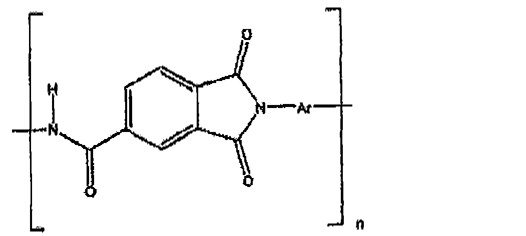 et

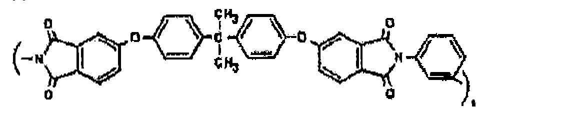

9. Procédé selon au moins l'une des revendications 6 à 8, dans lequel au moins l'une parmi l'au moins une couche protectrice (17) est pulvérisée sur le corps de base (4).

10. Procédé selon au moins l'une des revendications 6 à 9, dans lequel la matière plastique thermodurcissable est choisie dans le groupe constitué par une résine de polyester insaturé, une résine époxy, une résine de formaldéhyde phénolique, une résine phénolique de mélamine et une résine de mélamine-formaldéhyde.

11. Procédé selon au moins l'une des revendications 6 à 10, dans lequel le corps de base (4) est fabriqué par moulage et le matériau d'au moins l'une parmi l'au moins une couche protectrice (17) est appliqué à un outil de moulage utilisé pour le moulage du corps de base, de préférence sous la forme d'un film.

12. Procédé selon au moins l'une des revendications 6 à 11, dans lequel le corps de base (4) est fabriqué par moulage et le matériau d'au moins l'une parmi l'au moins une couche protectrice (17) est appliqué sous la forme d'un insert préformé à un outil de moulage utilisé pour le moulage du corps de base.

13. Utilisation d'une matière plastique de type imide thermorésistante en tant que couche protectrice (17) pour un corps de base en matière plastique thermodurcissable (16) d'une unité fonctionnelle (4) d'un élément chauffant (1) d'une table de cuisson à brûleur à gaz, l'élément chauffant comprenant une tête de brûleur (6), dans laquelle la couche protectrice (17) est appliquée aux parois intérieures du corps de base (16) et aussi aux parties de rebord contiguës à la tête de brûleur (6) et à la plaque de la table de cuisson (14).

14. Utilisation selon la revendication 13, dans laquelle la matière plastique de type imide est choisie dans le groupe comprenant un polyimide, un polyamide-imide et un polyester-imide.

15. Utilisation selon la revendication 13 ou 14, dans laquelle la matière plastique de type imide est choisie dans le groupe de matières plastiques comprenant les résines de polyimide, les résines de polyimide aromatique, en particulier les résines de polyimide aromatique en forme de film, les résines de polyamide-imide et les polyester-imides, en particulier conformes à au moins l'une des formules suivantes : 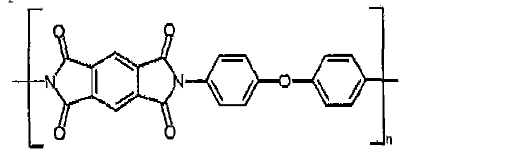 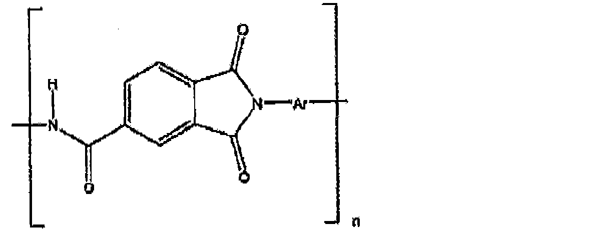 et

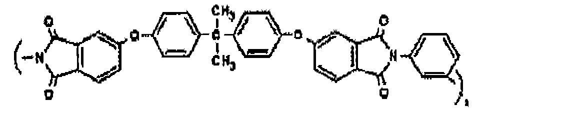

16. Utilisation selon au moins l'une des revendications 13 à 15, dans laquelle l'unité fonctionnelle est un brûleur à gaz (1), le corps de base est une coupelle de brûleur à gaz (4) et l'au moins une couche protectrice (17) est appliquée à au moins une section des parois intérieures et/ou extérieures de la coupelle de brûleur à gaz (4).

17. Appareil ménager de type domestique ou industriel, comprenant un élément chauffant (1) selon au moins l'une des revendications 1 à 5.
